# EUROPÄISCHE PATENTSCHRIFT

(11) **EP 1 320 686 B1**
(45) Veröffentlichungstag und Bekanntmachung des Hinweises auf die Patenterteilung: **25.02.2004**
(21) Anmeldenummer: 01969770.5
(22) Anmeldetag: 25.09.2001
(51) Int. Cl.: F15C 5/00

(54) **MIKROVENTIL MIT EINEM NORMALERWEISE GESCHLOSSENEN ZUSTAND**
MICRO VALVE NORMALLY IN A CLOSED POSITION
MICROSOUPAPE SE TROUVANT NORMALEMENT A L'ETAT FERME

(30) Priorität: 29.09.2000 DE 10048376
(43) Veröffentlichungstag der Anmeldung: 25.06.2003
(73) Patentinhaber: Fraunhofer-Gesellschaft zur Förderung der angewandten Forschung e.V., 80686 München (DE)
(72) Erfinder: RICHTER, Martin, 81677 München (DE)
(74) Vertreter: Schoppe, Fritz, Dipl.-Ing.
(86) Internationale Anmeldenummer: PCT/EP2001/011070
(87) Internationale Veröffentlichungsnummer: WO 2002/027194

(56) Entgegenhaltungen:
- EP-A- 0 546 427
- EP-A- 1 008 765
- WO-A-98/13605
- WO-A-99/38551
- US-A- 5 901 939

## Beschreibung

Die vorliegende Erfindung bezieht sich auf mikromechanisch strukturierte Bauelemente und insbesondere auf Mikroventile, wie sie beispielsweise in der Medizintechnik oder der Pneumatik eingesetzt werden, und auf Mikropumpen, die solche Mikroventile verwenden.

Ein Mikroventil gemäss Oberbegriff des Anspruchs 1 ist aus WO-A-98/13605 bekannt.

Der wachsende Bedarf an miniaturisierten und integrierten Systemen hat in jüngerer Zeit zu der Entwicklung von mikromechanischen Bauteilen, wie z.B. Mikroventilen und Mikropumpen, geführt. Um die erforderliche mechanische Betätigung solcher Bauelemente herbeizuführen, werden häufig Piezokeramiken eingesetzt, die sich bei Anlegen einer Spannung in Polarisationsrichtung der Piezokeramik zusammenziehen.

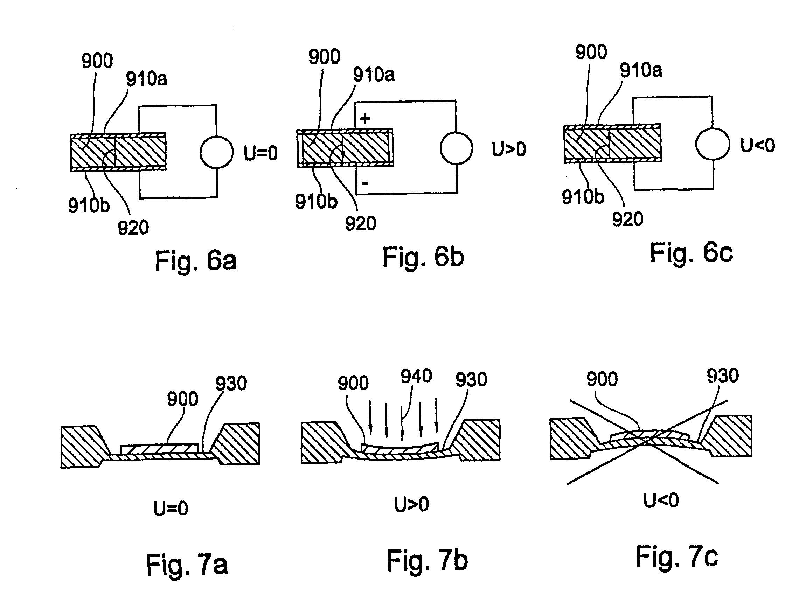

Um die Wirkungsweise solcher Piezokeramiken zu veranschaulichen, ist in Fig. 6a, 6b und 6c der Zustand einer Piezokeramik bei drei unterschiedlichen Spannungsansteuerungszuständen gezeigt. Die Piezokeramik 900, die in Fig. 6a-6c gezeigt ist, weist auf zwei sich gegenüberliegenden Außenflächen der Piezokeramik 900 Metallisierungen 910a und 910b auf. Die Metallisierungen 910a und 910b liegen sich in Richtung der Polarisationsrichtung 920 der Piezokeramik 900 gegenüber, wobei die an denselben angelegte Spannung U in Fig. 6a Null beträgt, während dieselbe in Fig. 6b positiv und in Fig. 6c negativ ist. Wie es zu sehen ist, zieht sich die Piezokeramik 900 in dem Fall, daß die angelegte Spannung U positiv ist im Vergleich zu dem Fall, daß die angelegte Spannung U Null beträgt, quer zur Polarisationsrichtung zusammen. Eine Kontraktion in Polarisationsrichtung ist aufgrund der Flachheit der Piezokeramik von beispielsweise 5µm im vergleich zu einer Kantenlänge von beispielsweise 5mm gering. Das Anlegen einer Spannung U entgegen der Polarisationsrichtung 920 führt nicht zu einer Dehnung sondern zu einer Depolarisation der Piezokeramik 900, wie es durch den im Vergleich zu den in Fig. 6a und 6b gezeigten Pfeilen 910a und 910b umgedrehten Pfeil 920 angezeigt ist.

Um die Kontraktionswirkung der Piezokeramik, wie sie in Fig. 6a-6c dargestellt ist, geeignet umzusetzen, wird bekanntermaßen beispielsweise eine Kombination aus einer Membran und einer daran befestigten Piezokeramik verwendet, wobei ein Beispiel für einen aus einer solchen Kombination erhaltenen Biegewandler in den Fig. 7a, 7b und 7c gezeigt ist. Ein Biegewandler besteht aus einer Piezokeramik 900, die an einer Hauptseite fest mit einer Membran 930 verbunden ist. Während in Fig. 7a der Spannungsansteuerungszustand dargestellt ist, da die Spannung, die an der Piezokeramik 900 anliegt, Null beträgt, zeigen die Fig. 7b und 7c die Spannungsansteuerungszustände, bei denen die an der Piezokeramik 900 angelegte Spannung positiv bzw. negativ ist. Wie es in Fig. 7b durch Pfeile 940 angezeigt ist, biegt sich die Membran 930 aufgrund der festen Verbindung der Piezokeramik 900 zu der Membran 930 durch, falls die Keramik 900 bei Anliegen einer entlang der Polarisationsrichtung positiven Spannung kontrahiert. Folglich wird bei Anliegen einer positiven Spannung an der Piezokeramik 900 die Kontraktion der Piezokeramik 900 in einen Hub der Membran 930 in eine Richtung 940 weg von der Piezokeramik 900 umgewandelt. Obwohl bei Anlegen einer entgegengerichteten Spannung, d.h. einer in Polarisationsrichtung negativen Spannung, eine Ausdehnung der Piezokeramik 900 und folglich eine entgegengesetzte Durchbiegung der Membran 930 zu erwarten wäre, ist diese Spannungsansteuerung gering und technisch nicht ausnutzbar, da dieselbe zu einer Depolarisation der Piezokeramik 900 führen würde, wobei dies durch das Durchstreichen der Fig. 7c veranschaulicht ist.

Obwohl der bezugnehmend auf Fig. 7a-7c beschriebene Biegewandler schnell ist, einen geringen Energieverbrauch, einen großen Hub und eine große Kraft aufweist und zudem insbesondere in Hinblick auf einen Einsatz in der Mikrofluidik den Vorteil besitzt, eine Trennung des zu schaltenden Mediums von der Piezokeramik zu bewirken, besteht ein Nachteil dieser Art von Biegewandler darin, daß aufgrund der unsymmetrischen Natur des Piezoeffektes, wie er bezugnehmend auf Fig. 6a-6c beschrieben worden ist, derselbe nur eine aktive Bewegung in Richtung der Membran (nach unten in Fig. 7a-7c) durchführen kann. Eine entgegengesetzte Bewegung (nach oben) kann durch den Biegewandler nur realisiert werden, wenn eine Spannung entgegen der Polarisationsrichtung angelegt wird, was jedoch bereits bei geringen Feldstärken in Gegenrichtung zu einer Depolarisation der Piezokeramik führt. Typische Depolarisationsfeldstärken von Piezokeramiken betragen etwa - 4000 V/cm.

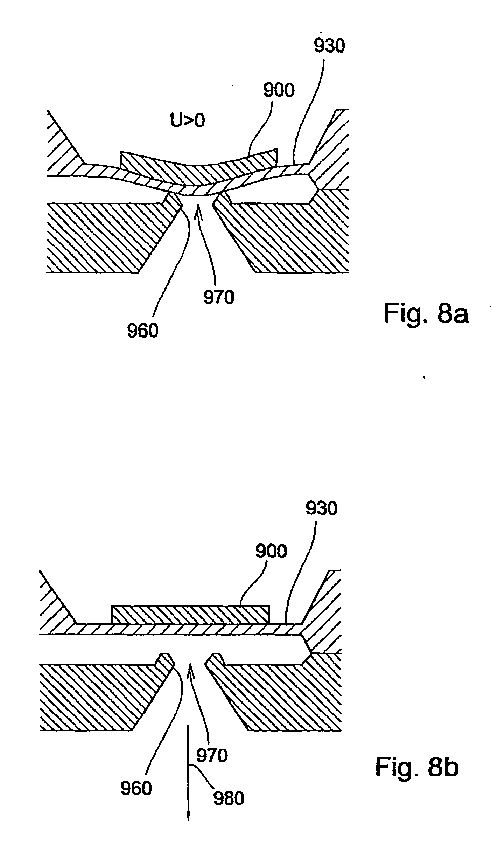

Ein bekanntes Mikroventil verwendet den im vorhergehenden beschriebenen Biegewandler, um eine Ventilfunktion zu realisieren, bei der das Ventil normalerweise geöffnet ist. Ein solches bekanntes normally-open- (normally open = normalerweise geöffnet) Mikroventil (im folgenden kurz als NO-Ventil bezeichnet) ist in den Fig. 8a und 8b gezeigt, wobei Fig. 8a den geschlossenen Zustand des Ventils und Fig. 8b den normalerweise offenen Zustand des Ventils darstellt. Wie es in Fig. 8a und 8b gezeigt ist, umfaßt ein solches herkömmliches NO-Ventil einen wie im vorhergehenden beschriebenen Biegewandler, der aus einer Piezokeramik 900 und einer Membran 930 besteht, sowie einen Ventilsitz, der unterhalb der Membran 930 angeordnet ist, und aus einer Dichtlippe 960 besteht, die eine Öffnung 970 umgibt. Wie es in Fig. 8b gezeigt ist, ist die Membran 930 in dem normalerweise geöffneten Fall, d.h. falls an der Piezokeramik keine Spannung anliegt, beabstandet von der Dichtlippe 960, so daß, wie es durch einen Pfeil 980 in Fig. 8b gezeigt ist, ein Fluid durch die Öffnung 970 dringen kann. Falls eine positive Spannung an der Piezokeramik 900 anliegt, bewegt sich die Membran 930 aufgrund der Durchbiegung, wie sie bezugnehmend auf Fig. 7a-7c erklärt wurde, in Richtung der Dichtlippe 960, wobei die Membran 930 in der vollständig geschlossenen Stellung auf der Dichtlippe 960 aufliegt, um die Öffnung 970 zu verschließen.

Ein Nachteil des im vorhergehenden beschriebenen NO-Ventils besteht darin, daß, falls die Spannung, die an der Piezokeramik anliegt, ausgeschaltet wird bzw. unterbrochen wird, die Membran wieder in ihre Ruhelage zurückkehrt, bei der dieselbe von dem Ventilsitz beabstandet ist, wodurch sich ein offener Zustand des Ventils einstellt. Für viele Anwendungsgebiete, wie z.B. in der Medizin, sind jedoch Ventile erforderlich, die in ihrem Grundzustand geschlossen sind. Bei der Medikamentenvergabe ist beispielsweise sicherzustellen, daß bei einem eventuellen Stromausfall dem Patienten kein Medikament verabreicht wird, um zu vermeiden, daß demselben eine Überdosis verabreicht wird. Um dies zu verhindern, ist eine "normalerweise geschlossene," (normally closed) Funktion erforderlich.

Die Aufgabe der vorliegenden Erfindung besteht darin, ein Mikroventil mit einem normalerweise geschlossenen Zustand zu schaffen.

Diese Aufgabe wird durch ein Mikroventil gemäß Anspruch 1 gelöst.

Ein erfindungsgemäßes Mikroventil mit einem normalerweise geschlossenen Zustand umfaßt eine Membran, eine Betätigungseinrichtung zur steuerbaren Deformation der Membran sowie einen durch die steuerbare Deformation der Membran verformbaren Ventilverschluß. Der Ventilverschluß liegt der Membran zumindest teilweise gegenüber und liegt in einer ersten Stellung in dem normalerweise geschlossenen Zustand des Ventils entlang einer zwischen dem Ventilverschluß und der Membran angeordneten Dichtlippe auf. Die Dichtlippe ist derart angeordnet, daß ein Auslaß des Ventils, der mit einem unterbrochenen Abschnitt der Dichtlippe fluidmäßig verbunden ist, gegen einen Eingangskanal, der an den Ventilverschluß angrenzt, fluiddicht abgeschlossen ist. Darüber hinaus ist der Ventilverschluß in eine zweite Stellung verformbar, um in einem offenen Zustand des Ventils den Auslaß mit dem Eingangskanal fluidmäßig zu verbinden.

Der vorliegenden Erfindung liegt die Beobachtung zugrunde, daß der Eingangsdruck, der von dem zu schaltenden Fluid auf das Ventil ausgeübt wird, ausgenutzt werden kann, um einen Ventilverschluß, wie z.B. eine Klappe, gegen Dichtlippen zu drücken, um das Ventil zu schließen. Zum Öffnen des Ventils ist lediglich eine Betätigungseinrichtung notwendig, die den Ventilverschluß von der geschlossenen Stellung in die offene Stellung versetzt. Auf diese Weise ist sichergestellt, daß bei Stromausfall oder sonstigen Vorkommnissen das Ventil geschlossen bleibt.

Gemäß einem Ausführungsbeispiel kann der Ventilverschluß eine Verschlußklappe sein, die in der Nähe des unterbrochenen Abschnitts der Dichtlippe eingespannt ist, wobei die Verformung des Ventilverschlusses einer klappmäßigen Biegung der Verschlußklappe entspricht. Aufgrund des "Aufklappens" der Verschlußklappe entsteht ein Spalt, durch den das zu schaltende Fluid strömen kann.

Der Ventilverschluß, wie z.B. die Verschlußklappe, kann an einer oder mehreren Stellen dicker gebildet, versteift sein oder Rippen aufweisen, um einerseits in dem offenen Zustand des Ventils eine Biegung der Verschlußklappe an nicht eingespannten, unerwünschten Stellen zu verhindern, was andernfalls aufgrund des Einlaßdruckes zu einem unerwünschten Verschließen der Verschlußklappe führen würde, und um andererseits in dem normalerweise geschlossenen Zustand des Ventils Durchbiegungen der Verschlußklappe aufgrund des Einlaßdruckes zu vermeiden, die andernfalls dazu führen könnten, daß die Verschlußklappe schräg entlang der Dichtlippe aufliegt, so daß eine schlechte Abdichtung erhalten wird. Um eine Durchbiegung des Ventilverschlusses in dem normalerweise geschlossenen Zustand des Ventils weiter zu verringern, können zwischen der Membran und dem Ventilverschluß an geeigneten Stellen Stützelemente vorgesehen sein, die ein Durchbiegen des Ventilverschlusses verhindern.

Gemäß einem weiteren Ausführungsbeispiel ist der Ventilverschluß eine an zwei gegenüberliegenden Randabschnitten eingespannte, durchbiegbare Membran. Biegt sich die durchbiegbare Membran aufgrund einer Deformation der Membran durch, so entstehen zwei sich gegenüberliegende Spalte, durch die ein zu schaltendes Medium zu dem Auslaß strömen kann.

Auf einer dem Ventilverschluß gegenüberliegenden Seite der Membran kann ein Stößel vorgesehen sein. Dies ergibt einerseits den Vorteil, daß weniger Deformation bzw. weniger Hub erforderlich ist, um den Ventilverschluß aufzudrücken, und andererseits, daß der Strömungswiderstand des eindringenden Fluids während des offenen Zustands des Ventils verringert werden kann, da der Abstand zwischen Membran und Verschlußklappe durch die Höhe des Stößels frei wählbar ist und nicht von dem maximalen Hub bzw. der maximalen Deformation der Membran abhängt.

Die Dichtlippe kann meanderförmig oder auf eine andere Weise geführt sein, um die Länge der Dichtlippe zu erhöhen, an der bei dem geöffneten Zustand des Ventils das Fluid hindurchtreten kann. Dies ist insbesondere bei der Pneumatik vorteilhaft, da hierdurch höhere Durchflußraten erzeugt werden können.

Gemäß einem speziellen Ausführungsbeispiel besteht das NC- bzw. normalerweise geschlossene Ventil aus einem ersten Chip und einem zweiten Chip. Der erste Chip umfaßt die Membran, auf der auf jeweils gegenüberliegenden Seiten der Stößel und eine Piezokeramik als Betätigungseinrichtung angebracht sind, sowie die Dichtlippe, die die rechteckige Membran entlang dreier Seiten umgibt. Der zweite Chip umfaßt die Verschlußklappe als Ventilverschluß, wobei die Verschlußklappe in der Nähe der Seite der Membran befestigt ist, an der die Dichtlippe unterbrochen ist und die Membran nicht umgibt.

Der erste Chip und der zweite Chip sind derart gebondet, daß die Verschlußklappe der Membran zumindest teilweise gegenüberliegt, und daß die Verschlußklappe die Dichtlippe überragt. Ein Vorteil dieser Anordnung besteht darin, daß zur Verbindung der beiden Chips ein fügeschichtloser Bondschritt verwendet werden kann, so daß kein Zwischenraum zwischen dem Stößel 120 und der Verschlußklappe 180 entsteht, die Reproduzierbarkeit des Ventils aufgrund des Wegfalls von Schwankungen der Haftmittelhöhe erhöht ist, und zudem die Medienbeständigkeit und -verträglichkeit verbessert ist. Zudem kann ein derart gebildetes Ventil leicht in ein aus einem Chip gebildetes Mikrofluidsystem integriert werden, wodurch ein Mikrofluidsystem mit geringerem Totvolumen und somit kleineren Schaltzeiten erhalten werden kann, was insbesondere bei der Pneumatik vorteilhaft ist.

Ein Vorteil des erfindungsgemäßen Ventils besteht darin, daß dasselbe einen normalerweise geschlossenen Zustand aufweist, so daß dasselbe auch dann geschlossen ist, wenn eine Leistungszufuhr ausfällt oder auf sonstige Weise unterbrochen wird. Ein weiterer Vorteil besteht darin, daß das erfindungsgemäße Ventil leicht in bestehende Mikrosysteme integriert werden kann.

Ein weiterer Vorteil der vorliegenden Erfindung besteht darin, daß aufgrund des frei wählbaren und erzielbar großen Umfangs des Ventilverschlusses höhere Durchflußraten erreicht werden können als bei herkömmlichen Ventilen, bei denen durch ein aktives Element lediglich eine kleine Öffnung zugedrückt wird.

Ferner ist das erfindungsgemäße Ventil aufgrund des Vorsehens einer Membran, um den Aktor von dem zu schaltenden Fluid zu trennen, im Gegensatz zu beispielsweise Ventilen, die eine elekrostatische Anziehung als Schaltkraft verwenden, sowohl für Flüssigkeiten als auch Gase oder Gemische derselben geeignet, wodurch der Einsatzbereich des Ventils erhöht ist.

Gemäß einem Ausführungsbeispiel ist das erfindungsgemäße NC-Ventil einer Mikromembranpumpe vorgeschaltet, wobei die Mikromembranpumpe und das NC-Ventil auf einem Trägersubstrat angebracht sind, das Verbindungskanäle aufweist, die dieselben verbindet.

Gemäß einem weiteren Ausführungsbeispiel ist eine Mikroperistaltikpumpe aus zwei erfindungsgemäßen NC-Ventilen gebildet, die über eine Pumpkammer mit einer Pumpmembran miteinander verbunden und gegensinnig angeordnet sind. Die so erhaltene Peristaltikpumpe kann in einer Ein-Chip-Lösung realisiert werden und ist zudem auch ohne anliegende Spannung selbstsperrend in beide Richtungen.

Ein weiteres Ausführungsbeispiel sieht ein 3/2-Wegemikroventil auf einem Chip vor, wobei hierfür ein erfindungsgemäßes NC-Ventil und ein herkömmliches NO-Ventil verwendet werden.

Bevorzugte Ausführungsbeispiele der vorliegenden Erfindung werden nachfolgend bezugnehmend auf die beiliegenden Zeichnungen näher erläutert. Es zeigen:
- Fig. 1a und 1b: Seitenschnittansichten eines Ausführungsbeispiels eines NC-Ventils gemäß der vorliegenden Erfindung, wobei Fig. 1a den normalerweise geschlossenen zustand des Ventils und Fig. 1b den offenen Zustand des Ventils darstellt;
- Fig. 2a und 2b: eine Unteransicht eines Aktorchips bzw. eine Draufsicht eines Klappenchips des NC-Ventils von Fig. 1a und 1b in dem normalerweise geschlossenen Zustand des Ventils;
- Fig. 3: eine Seitenschnittansicht eines Ausführungsbeispiels, bei dem das NC-Ventil von Fig. 1a, 1b, 2a und 2b einer Mikromembranpumpe vorgeschaltet ist;
- Fig. 4: eine Seitenschnittansicht eines Ausführungsbeispiels einer Peristaltikpumpe, die aus zwei gegensinnig angeordneten NC-Ventilen, die demjenigen, das in Fig. 1a, 1b, 2a und 2b gezeigt ist, entsprechen, besteht;
- Fig. 5a und 5b: eine Seitenschnittansicht eines Ausführungsbeispiels eines 3/2-Wegeventils, das das in Fig. 1a, 1b, 2a und 2b gezeigte NC-Ventil aufweist, wobei Fig. 5a und 5b unterschiedliche Spannungsansteuerungszustände zeigen;
- Fig. 6a, 6b und 6c: Diagramme, die die Spannungsansteuerung einer Piezokeramik veranschaulichen, wobei die an der Piezokeramik in Polarisationsrichtung angelegte Spannung in Fig. 6a Null, in Fig. 6b positiv und in Fig. 6c negativ ist;
- Fig. 7a, 7b und 7c: Diagramme, die die Bewegung einer Membran eines Biegewandlers mit einer Piezokeramik bei verschiedenen Spannungsansteuerungszuständen veranschaulichen, wobei die an der Piezokeramik in Polarisationsrichtung angelegte Spannung in Fig. 7a Null, in Fig. 7b positiv und in Fig. 7c negativ ist; und
- Fig. 8a und 8b: eine Seitenschnittansicht eines herkömmlichen NO-Ventils, wobei Fig. 8a den geschlossenen Zustand des Ventils und Fig. 8b den normalerweise geöffneten Zustand des Ventils darstellt.

Bevor bezugnehmend auf die Figuren verschiedene Ausführungsbeispiele der vorliegenden Erfindung beschrieben werden, wird darauf hingewiesen, daß gleiche Elemente in den verschiedenen Figuren mit gleichen Bezugszeichen versehen worden sind, und daß bei der Beschreibung der Figuren eine wiederholte Erklärung identischer Elemente weggelassen wird, um Wiederholungen in der Beschreibung zu vermeiden.

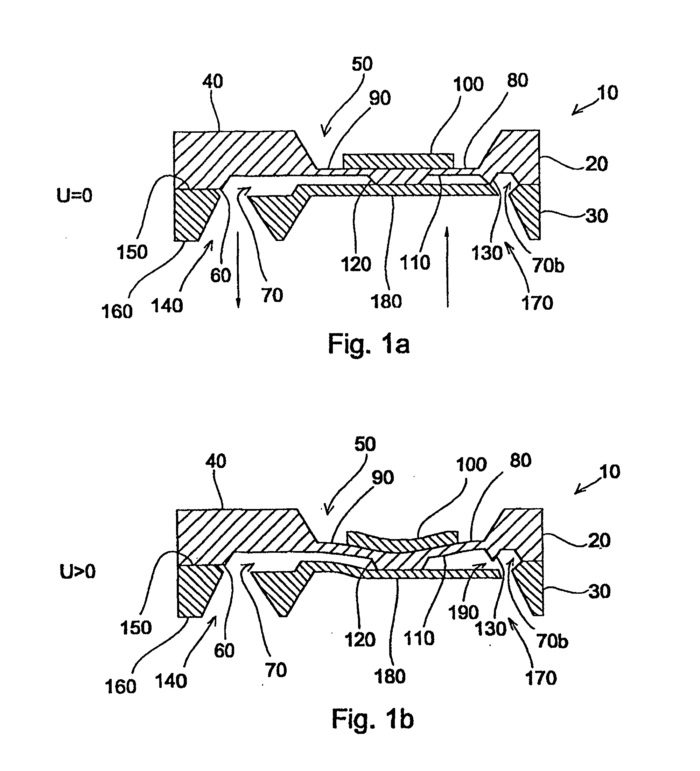

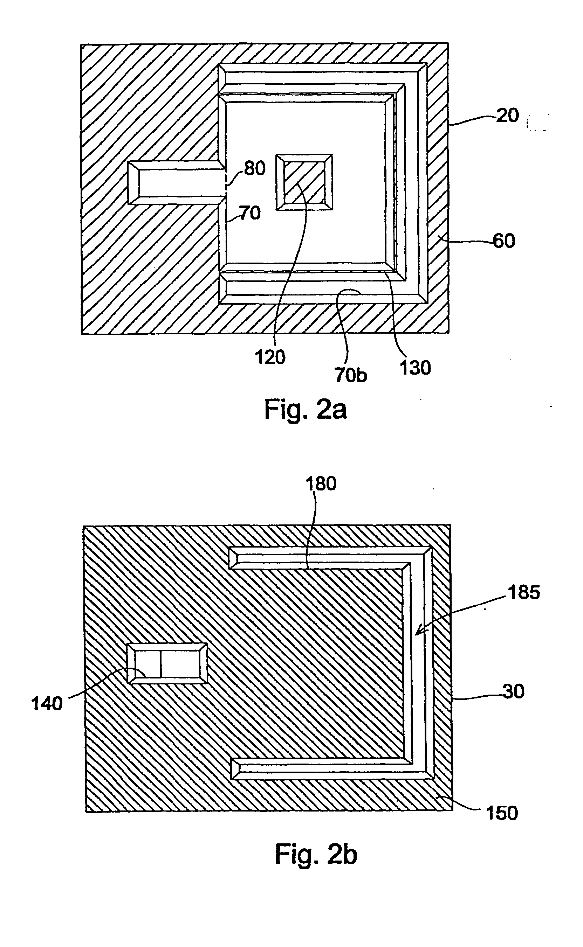

Bezugnehmend auf Fig. 1a, 1b, 2a und 2b wird zunächst ein Ausführungsbeispiel eines NC-Ventils gemäß der vorliegenden Erfindung beschrieben, wobei Fig. 1a und 1b Seitenschnittansichten des Ventils bei einem normalerweise geschlossenen Zustand bzw. einem geöffneten Zustand des Ventils zeigen, und Fig. 2a und 2b eine Unteransicht eines Aktorchips bzw. eine Draufsicht eines Klappenchips des Ventils in dem normalerweise geschlossenen Zustand des Ventils zeigen. Es wird darauf hingewiesen, daß Fig. 1a, 1b, 2a und 2b die Strukturen exemplarisch mit Abschrägungen zeigen, wie sie beim KOH-Ätzen auftreten, wobei die gezeigten Strukturen jedoch auch auf andere Weisen ohne Abschrägungen hergestellt werden können.

Wie es am besten in Fig. 1a und 1b zu sehen ist, besteht das NC-Ventil 10 aus einem ersten Chip bzw. einem Aktorchip 20 sowie einem zweiten Chip bzw. einem Klappenchip 30. Der Aktorchip 20 weist auf einer ersten Hauptseite 40 eine Absenkung bzw. Ausnehmung 50 und auf einer gegenüberliegenden Hauptseite 60 eine Absenkung 70 auf, wobei durch die beiden Absenkungen 50 und 70 eine Membran 80 gebildet ist, die im folgenden als Aktormembran bezeichnet wird. Auf einer ersten Seite 90 der Aktormembran ist eine Piezokeramik 100 angebracht, während auf einer zweiten Seite 110 der Aktormembran 80 ein Stößel 120 vorsteht.

In Fig. 2a sind der Stößel 120, die Absenkung 70 und mit gestrichelter Linie der Bereich der Absenkung, der die Aktormembran 80 bildet, von der Hauptseite 60 des Aktorchips 20 aus gesehen gezeigt, wobei die Aktormembran 80 und der Stößel 120 in lateraler Richtung im wesentlichen quadratisch gebildet und zudem in einer zentrierten Anordnung angeordnet sind. Es ist ferner zu sehen, daß die Membran 80 entlang drei ihrer vier Seiten bzw. Kantenabschnitte von einer Dichtlippe 130 umgeben ist. Wie es am besten in Fig. 1a und 1b zu sehen ist, ist die Dichtlippe 130 auf der Hauptseite 60 des Aktorchips 20, die beispielsweise gleichzeitig mit dem Stößel 120 strukturiert wird, angeordnet, um dort vorzustehen, und weist einen Querschnitt auf, der im wesentlichen einem Dreieck mit abgeflachter Spitze entspricht.

Der Klappenchip 30 ist mit dem Aktorchip 20 verbunden und umfaßt einen Auslaßbereich bzw. einen Auslaßport 140, der einen Durchgang bildet, der sich von einer ersten Hauptseite 150 zu einer zweiten Hauptseite 160 des Klappenchips 30 erstreckt, sowie einen Eingangskanalbereich 170, der durch eine Absenkung in der zweiten Hauptseite 160 gebildet ist, die sich bis zu einer Verschlußklappe bzw. einer Klappmembran 180 erstreckt. Die Verschlußklappe ist, wie es in Fig. 2b gezeigt ist, in einer quadratischen Form gebildet, wobei jedoch auch andere Formen möglich sind, und ist an drei von vier ihrer Seiten bzw. Kanten über einen Schlitz 185 gegenüber dem Rest des Klappenchips 30 frei bewegbar, während dieselbe an der vierten Seite befestigt bzw. eingespannt ist. Die Ventilklappe 180 erstreckt sich entlang ihrer lateralen Ausdehnung etwas über die laterale Ausdehnung der Dichtlippe 130 hinaus, so daß der Eingangskanalbereich 170 in dem normalerweise geschlossenen Zustand des Ventils 10 seitlich durch den Klappenchip 30 und gegen den Auslaßbereich 140 durch die Ventilklappe 180, die Dichtlippe 130 und einen Teil 70b der Absenkung 70, der die Dichtlippe 130 umgibt, begrenzt ist. Es wird darauf hingewiesen, daß die Form des Eingangskanalbereichs 170 in lateraler Richtung, d.h. parallel zu der Zeichenebene von Fig. 2a und 2b, bei diesem Ausführungsbeispiel ebenfalls im wesentlichen quadratisch ist, obwohl dies in Fig. 2a und 2b nicht zu sehen ist, wobei jedoch auch andere Formen möglich sind.

Es wird darauf hingewiesen, daß durch die Piezokeramik 100 und die Aktormembran 80 ein Biegewandler realisiert ist, der hinsichtlich seiner Funktionsweise bezugnehmend auf Fig. 6a-6c und 7a-7c beschrieben worden ist. Insbesondere besteht der Biegewandler bei dem gezeigten Ausführungsbeispiel aus einer Piezokeramik 100, auf der auf in Richtung der Polarisationsrichtung gegenüberliegenden Seiten Metallisierungen gebildet sind, und die einen großen d31- bzw. Ladungs-Koeffizienten aufweist. Die Membran 80 besteht aus Silizium, wobei jedoch auch andere Materialien möglich sind. Die Piezokeramik 100 ist durch ein geeignetes Haftmittel an der Siliziummembran 80 angebracht. Der so gebildete Silizium-Piezo-Biegewandler ist so ausgelegt, daß sich die Aktormembran 80 bei einem angelegten Spannungshub bei einem spezifizierten Gegendruck noch um einen ebenfalls spezifizierten Weg bzw. Hub auslenken kann. Bei diesem Silizium-Biege-Wandler betragen typische Werte für den Gegendruck 1 bis 10 bar, für den Hub 5-40 µm, die Seitenlänge der Aktormembran 4-15 mm und die Schaltzeit 1 ms.

Im folgenden wird kurz ein mögliches Verfahren zum Herstellen des im vorhergehenden beschriebenen NC-Ventils beschrieben. Zunächst werden der Aktorchip 20 und der Klappenchip 30 einem Ätzverfahren, wie z.B. einem anisotropen KOH-Ätzen, unterzogen, um die Absenkung 50, die Absenkung 70, die Membran 80, den Stößel 120 und die Dichtlippe 130 zu bilden, bzw. um den Auslaßbereich 140, den Eingangskanalbereich 170 sowie die Verschlußklappe 180 zu bilden. Hierauf werden die beiden Chips 20 und 30 in einem fügeschichtlosen Waferbondschritt, wie z.B. dem Silicon-Fusion-Waferbond, miteinander verbunden. Nach dem Waferbonding-Schritt haftet der Stößel 120 fest an der Verschlußklappe 180, sowie der Rand der Verschlußklappe 180 fest an der Dichtlippe 130. Der Klappenrand wird von der Dichtlippe durch Ätzen von der Hauptseite 160 des Klappenchips 30 aus wieder gelöst. Die Ätzzeit kann entweder derart lang gewählt werden, daß neben der Dichtlippe ferner auch der Stößel von der Verschlußklappe gelöst wird, oder die Ätzzeit wird kürzer gewählt, um lediglich die Dichtlippe und nicht den Stößel von der Verschlußklappe zu lösen. Die Dicke einer vor dem Waferbondschritt auf der Hauptseite 60 angebrachten Oxidschicht wird hierzu vorzugsweise derart gewählt, daß Stellen, die nach dem Waferbonden freigeätzt werden sollen, durch laterales Unterätzen freiätzbar sind. Die Hauptseite 40 des Aktorchips 20 kann mit beispielsweise Aluminium beschichtet werden, um als eine Kontaktierung für die Piezokeramik 100 zu dienen.

Im folgenden wird die Funktionsweise des NC-Ventils von Fig. 1a, 1b, 2a und 2b erklärt. Wie es in Fig. 1a zu sehen ist, ist die Verschlußklappe derart angeordnet, daß die lateralen Abmessungen der Verschlußklappe 180 größer als die umlaufende Dichtlippe 130 des Aktorchips 20 sind, und daß der Einlaßdruck, der durch ein zu schaltendes Fluid in dem Eingangskanalbereich 170 auf die an den Eingangskanalbereich 170 angrenzende Verschlußklappe 180 ausgeübt wird, schließend wirkt. Ohne Anlegen einer Spannung an die Piezokeramik 100 und damit ohne Druckbeaufschlagung auf die Verschlußklappe 180 ist folglich die Verschlußklappe 180 geschlossen. Zum Öffnen des Ventils 10 wird eine in Polarisationsrichtung positive Spannung an den Silizium-Piezo-- Biegewandler, der durch die Piezokeramik 100 und die Membran 80 gebildet ist, angelegt, wodurch der Silizium-Piezo-Biegewandler mit dem Stößel 120 die Verschlußklappe 180 gegen den Einlaßdruck aufdrückt. Genauer gesagt wird, wie es in Fig. 1b zu sehen ist, durch die an der Piezokeramik 100 in Polarisationsrichtung anliegende, positive Spannung die Membran 80 zusammen mit dem Stößel 120 in Richtung der Ventilklappe 180 bewegt, die sich aufgrund des Drucks des Stößels 120 aufbiegt und einen Spalt 190 zwischen sich und der Dichtlippe 130 bildet.

Es wird darauf hingewiesen, daß, obwohl dies in Fig. 1b, die lediglich eine Seitenschnittansicht zeigt, nicht zu sehen ist, der Spalt 190 entlang der drei frei bewegbaren Kantenabschnitte der Ventilklappe 180 entsteht, und daß deshalb ein sich in dem Eingangskanalbereich 170 befindliches Fluid drei Kanten der Ventilklappe 180 umströmen kann, um den Auslaßbereich 140 zu erreichen.

Um zu verhindern, daß die Ventilklappe aufgrund des Einlaßdruckes und der relativ großen Hebelwirkung an den frei beweglichen Randabschnitten der Ventilklappe 180 zu der Dichtlippe 130 hin umgebogen wird, kann es vorteilhaft sein, die Dicke der Verschlußklappe derart auszulegen, daß die Verschlußklappe in der Nähe der Einspannstelle möglichst leicht biegbar ist, und daß dieselbe insbesondere in dem Bereich, der der Einspannstelle über den Stößel 120 gegenüberliegt, verstärkt ist und sich dort möglichst nicht biegt. Auf diese Weise wird beispielsweise verhindert, daß sich die Ventilklappe 180 in dem Bild von Fig. 1b nicht auf die Dichtlippe 130 zurückbiegt, wodurch verhindert wird, daß sich der Spalt 190 in dem geöffneten Zustand des Ventils 10 entlang der der Einspannstelle gegenüberliegenden Kante der Ventilklappe 180 verschmälert oder sogar schließt. Die Versteifung der Ventilklappe 180, indem dieselbe an bestimmten Stellen dicker gebildet wird, kann ferner verwendet werden, um in dem normalerweise geschlossen Zustand des Ventils 10 zu verhindern, daß sich die Verschlußklappe 180 aufgrund des Einlaßdruckes durchbiegt, wodurch die Leckrate des Ventils verringert werden kann, da die Verschlußklappe 180 auch an den Ecken der Dichtlippe 130 aufliegt.

Es wird ferner darauf hingewiesen, daß die Höhe des Stößels 120 bzw. die Tiefe der Absenkung 70 derart ausgewählt ist, daß der Strömungswiderstand des zu schaltenden Fluids in dem offenen Zustand des Ventils 10 durch den sich bildenden Spalt 190 und den Zwischenraum zwischen der Aktormembran 80 und der Verschlußklappe 180 gering bleibt. Die Tiefe der Absenkung 70 beträgt beispielsweise 100 - 300 µm.

Obwohl es in Fig. 1a, 1b, 2a und 2b nicht gezeigt ist, können zwischen der Aktormembran 80 und der Verschlußklappe 180 an geeigneten Stellen, wie z.B. in der Nähe der von dem Betrachter aus rechten Ecken, Stützelemente vorgesehen sein, die vorzugsweise auf der Aktormembran 80 oder aber auf der Verschlußklappe 180 vorgesehen sein können. Diese Stützelemente verhindern ein Durchbiegen der Verschlußklappe 80 in dem Bereich zwischen dem Stößel 120 und der Dichtlippe 130 in dem normalerweise geschlossenen Zustand des NC-Ventils 10 und damit ein schräges Aufliegen der Verschlußklappe 180 auf der Dichtlippe 130. Auf diese Weise kann die Abdichtung in dem normalerweise geschlossenen Zustand des Ventils 10 verbessert werden. Falls dieselben an der Aktormembran 80 vorgesehen sind, weisen die Stützelemente vorzugsweise einen sehr schmalen Querschnitt auf, um die Biegeeigenschaften der Aktormembran 80 nicht zu beeinträchtigen, und werden vorzugsweise in den selben Ätzschritten wie der Stößel 120 und Dichtlippe 130 gebildet und nach dem Bonden von der Verschlußklappe 180 gelöst.

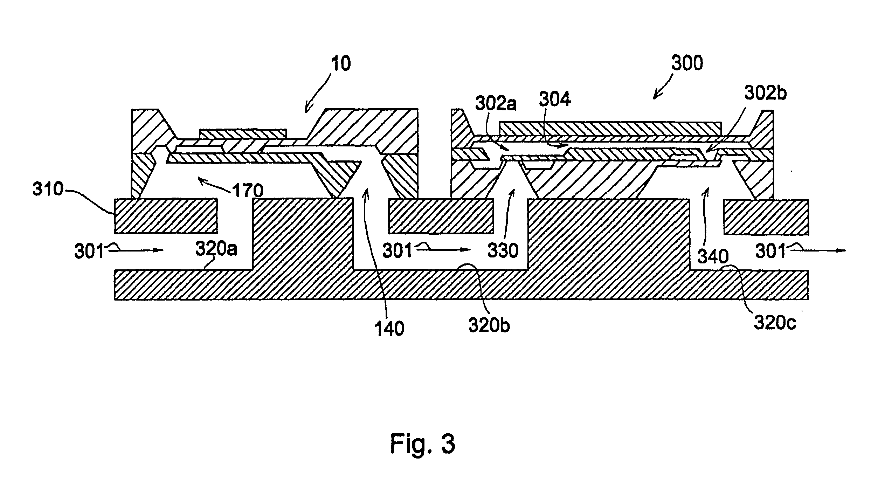

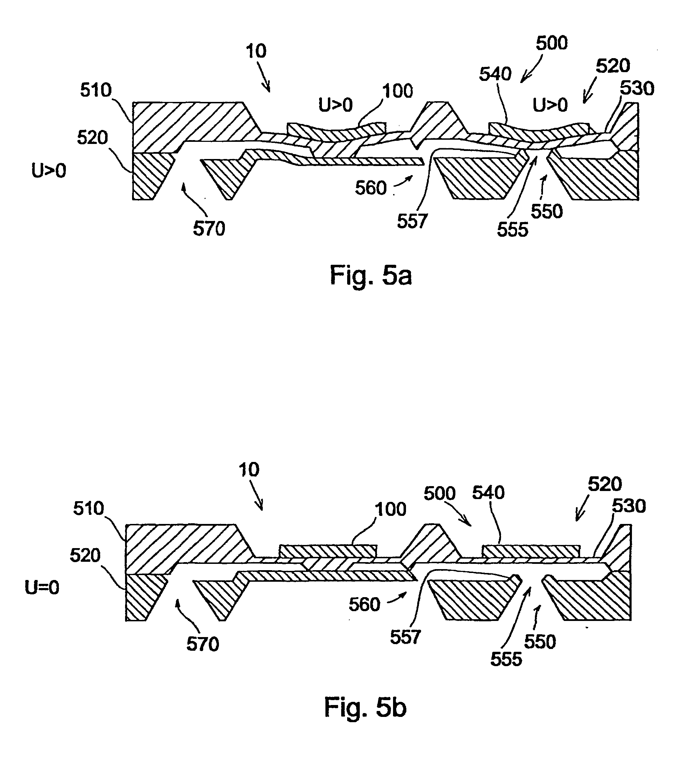

Im folgenden werden bezugnehmend auf Fig. 3-5a und 5b Ausführungsbeispiele beschrieben, bei denen das bezugnehmend auf Fig. 1a, 1b, 2a und 2b beschriebene NC-Ventil verwendet wird.

Fig. 3 zeigt eine hybride Kombination des NC-Ventils 10 mit einer Mikromembranpumpe, wobei die Mikromembranpumpe 300, die zwei in Flußrichtung 301 entgegengesetzt ausgerichtete, passive Rückschlagventiele 302a und 302b und eine Pumpkammer 304 aufweist, und das NC-Ventil auf einem Trägersubstrat 310 angebracht sind, in welchem Kanäle 320a, 320b und 320c gebildet sind. Insbesondere ist der Verbindungskanal 320a mit dem Eingangskanalbereich 170 des NC-Ventils 10 verbunden, während der Verbindungskanal 320b den Auslaßbereich 140 mit einem Eingang 330 der Mikromembranpumpe 300 fluidmäßig verbindet. Der Verbindungskanal 320 ist mit dem Ausgang 340 der Mikromembranpumpe 300 verbunden.

Es wird eine Anordnung erhalten, die aufgrund der Funktionsweise des NC-Ventils 10 ohne angelegte Spannung selbstsperrend in beide Flußrichtungen ist. Auf diese Weise ist die Anordnung als selbstsperrende Mikropumpe für die Medizintechnik geeignet. Ein weiterer Vorteil der Verwendung des NC-Ventils bei dieser Anordnung besteht darin, daß hohe Flußraten erzielt werden können, indem das NC-Ventil 10 auf einen geringen Strömungswiderstand hin optimiert wird, indem, wie es im vorhergehenden erwähnt wurde, die Stößelhöhe geeignet eingestellt wird, und die Mikromembranpumpe auf einen hohen Durchfluß hin entworfen wird.

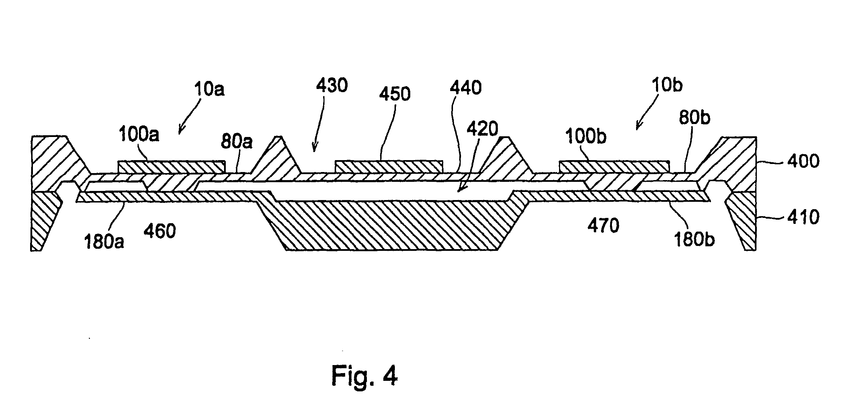

In Fig. 4 ist ein Ausführungsbeispiel einer Peristaltikpumpe gezeigt, bei der zwei gegensinnig angeordnete NC-Ventile 10a und 10b verwendet werden, die demjenigen, das bezugnehmend auf Fig. 1a, 1b, 2a und 2b beschrieben wurde, bis auf- im folgenden beschriebene Ausnahmen entsprechen. Wie es in Fig. 4 zu sehen ist, sind die beiden Aktorchips und die beiden Klappenchips der NC-Ventile 10a und 10b in einem einzigen Chip 400 bzw. 410 integriert. Die beiden Auslaßbereiche der NC-Ventile 10a und 10b wurden durch einen Pumpkammer 420 ersetzt, der sich zwischen den beiden Chips 400 und 410 erstreckt und die Bereiche zwischen der Aktormembran 80a und 80b und der Ventilklappe 180a und 180b des Ventils 10a und des Ventils 10b miteinander verbindet. Oberhalb der Pumpkammer 420 weist der Chip 400 eine Absenkung 430 auf, wodurch eine Pumpmembran 440 gebildet wird. Auf der der Pumpkammer 420 abgewandten Seite der Pumpmembran 440 ist eine Piezokeramik 450 angebracht. Die Spannungen, die an den Piezokeramiken 100a und 100b der beiden NC-Ventile 10a und 10b sowie der Piezokeramik 450 anliegen, werden geeignet gesteuert, um eine Pumpwirkung von einem Tor 460, das durch den Eingangskanalbereich des NC-Ventils 10a gebildet ist, zu einem Tor 470, das durch den Eingangskanalbereich des NC-Ventils 10b gebildet ist, oder umgekehrt zu erzielen.

Der Aufbau einer Peristaltikpumpe, wie er bezugnehmend auf Fig. 4 beschrieben wurde, mit Hilfe von zwei NC-Ventilen, wie sie bezugnehmend auf Fig. 1a, 1b, 2a und 2b beschrieben wurden, ist darin vorteilhaft, daß die Peristaltikpumpe auch im Spannungslosen Zustand, d.h. auch bei Spannungsausfall, selbstsperrend in beide Richtungen ist. Zudem ist die Peristaltikpumpe in einer Ein-Chip-Lösung realisierbar.

Es wird jedoch darauf hingewiesen, daß die Absenkungstiefe der NC-Ventile 10a und 10b entgegen der vorhergehenden Beschreibung in dem vorliegenden Fall vorzugsweise lediglich 10 - 50µm beträgt, um ein hohes Kompressionsverhätnis (Kompressionsverhätnis = Hubvolumen der Pumpmembran / Totvolumen der Pumpkammer) und damit eine wünschenswert hohe Blasentoleranz der Pumpe zu erzielen. Aufgrund der hierdurch auftretenden Spaltströmungen ist mit begrenzten Flußraten der Pumpe zu rechnen. Die Wahl der Absenkungstiefe stellt somit einen Kompromiß aus einer möglichst hohen Flußrate und einer möglichst hohen Blasentoleranz dar.

Bezugnehmend auf Fig. 4 darauf hingewiesen, daß es ferner möglich ist, eine Peristaltikpumpe aufzubauen, die lediglich ein NC-Ventil verwendet, das demjenigen, das in Fig. 1a, 1b, 2a und 2b gezeigt ist, entspricht, und die als ein zweites Ventil beispielsweise ein Ventil verwendet, wie es in Fig. 8 gezeigt ist.

Bezugnehmend auf Fig. 5a und 5b wird ein Ausführungsbeispiel eines 3/2-Wegemikroventils beschrieben, wobei Fig. 5a und 5b Seitenschnittansichten desselben bei unterschiedlichen Spannungsansteuerungszuständen zeigen. Das 3/2-Wegemikroventil besteht aus einem NC-Ventil 10 wie demjenigen, das in Fig. 1a, 1b, 2a und 2b gezeigt ist, und einem NO-Ventil 500, wobei beide Ventile auf einem Chip realisiert sind. Insbesondere umfaßt ein Chip 510 den Aktorchip des NC-Ventils 10 sowie eine weitere Absenkung 520, durch die eine Membran 530 gebildet ist, auf der eine Piezokeramik 540 angebracht ist. Ein zweiter Chip 520, der mit dem ersten Chip gebondet ist, umfaßt neben dem Klappenchip des NC-Ventils 10 einen Auslaßbereich 550, der sich von einer dem ersten Chip 510 angewandten Hauptseite des Chips 520 zu der dem ersten Chip 510 zugewandten Hauptseite des Chips 520 erstreckt und dort an einer Öffnung 555 endet, die von einer Dichtlippe 557 umgeben ist. Der Aufbau des NO-Ventils 500, das aus einem durch die Membran 530 und der Piezokeramik 540 gebildeten Biegewandler und einem Ventilsitz besteht, der durch die Dichtlippe 557 gebildet ist, die die Öffnung 555 umgibt, entspricht hinsichtlich seiner Funktionsweise dem bezugnehmend auf Fig. 8a und 8b beschriebenen herkömmlichen NO-Ventil.

Bei dem im vorhergehenden beschriebenen 3/2-Wegeventil dient der Eingangskanalbereich des NC-Ventils 10 als ein Eingang 560 des 3/2-Wegeventils, während der Auslaßbereich 550 des NO-Ventils 500 als ein erster Ausgang und der Auslaßbereich des NC-Ventils 10 als ein zweiter Ausgang 570 dient. Der Eingang 560 bzw. der eingangskanalbereich des NC-Ventils 10 ist mit dem Bereich zwischen der Membran 530 und der Dichtlippe 557 des NO-Ventils 500 fluidmäßig verbunden, so daß das NC-Ventil 10 zwischen den Eingang 560 und den Ausgang 570 und das NO-Ventil 500 zwischen den Eingang 560 und den Ausgang 550 geschaltet ist.

Die Spannungen, die an der Piezokeramik 100 des NC-Ventils 10 und der Piezokeramik 540 des NO-Ventils 500 anliegen, werden geeignet angesteuert, um eine Ventilwirkung zwischen dem Eingang 560 und dem ersten Ausgang 550 und zwischen dem Eingang 560 und dem zweiten Ausgang 570 zu erzeugen. Zur Veranschaulichung der Funktionsweise des 3/2-Wegeventils sind in Fig. 5a und 5b zwei verschiedene Spannungsansteuerungszustände für die Piezokeramiken 100 und 540 des NC-Ventils 10 und des NO-Ventils 500 gezeigt. Wie es in Fig. 5a zu sehen ist, ist, falls eine in Polarisationsrichtung positive Spannung an den Piezokeramiken 10 und 540 der beiden Ventile 10 und 500 anliegt, das NC-Ventil 10 geöffnet, während das NO-Ventil 500 geschlossen ist. In dem Normalzustand, d.h. wenn keine Spannung anliegt, befindet sich das NC-Ventil in seinem normalerweise geschlossenen Grundzustand, während sich das NO-Ventil 500 in einem geöffneten Zustand befindet.

Durch Verwenden des NC-Ventils 10 zwischen dem Eingang 560 und dem Ausgang 570 des 3/2-Wegeventils kann verhindert werden, daß bei einem Spannungsausfall ein zu schaltende Fluid von dem Eingang 560 zu dem zweiten Ausgang 570 gelangt, sondern daß dasselbe lediglich von dem Eingang 560 zu dem Ausgang 550 fließen kann, wie es in Fig. 5b zu sehen ist.

Bezugnehmend auf die Fig. 4, 5a und 5b wird darauf hingewiesen, daß das erfindungsgemäße Ventil oder eine Mehrzahl desselben beliebig mit anderen Mikrofluidvorrichtungen, wie z.B. Pumpen, Ventilen, kombiniert werden kann, um ein Mikrofluidsystem zu bilden. Das so erzeugte Mikrofluidsystem kann zudem in einem Chip realisiert werden, wodurch erhöhte Schaltzeiten realisierbar sind. Ein Ventil mit einem Eingang und zwei Ausgängen, das ohne Spannung selbstsperrend ist könnte beispielsweise aus einem NO-Ventil und einem NC-Ventil gebildet werden, wobei der Eingangskanalbereich des NC-Ventils als Eingang, der Auslaßbereich des NC-Ventils als erster Ausgang und der Ausgangsbereich des NO-Ventils als zweiter Ausgang dient, und wobei der Bereich zwischen dem Biegewandler und dem Ventilsitz des NO-Ventils mit dem Bereich zwischen der Aktormembran und der Verschlußklappe des NC-Ventils verbunden ist.

Es wird darauf hingewiesen, daß, obwohl bei den vorhergehenden Ausführungsbeispielen das Mikroventil aus zwei aneinander gebondeten Silizium-Chips bzw. vereinzelten Siliziumwafern, als Substrate bestand, das Mikroventil ferner auf andere Weise gebildet sein kann, wie z.B. durch Abscheiden von mehreren photolithographisch strukturierten Schichten und Ätzen von zu bildenden Hohlräumen. Das Mikroventil ist ferner nicht auf bestimmte Materialien begrenzt. Neben den im vorhergehenden beschriebenen Halbleitermaterialien kann das NC-Ventil ferner aus Kunststoff oder anderen zur Mikrofluidik geeigneten Materialien verwendet werden.

Obwohl im vorhergehenden ein Biegewandler als eine Betätigungseinrichtung verwendet wurde, der aus der Aktormembran und der Piezokeramik als eine Betätigungseinrichtung bestand, ist es ferner möglich, andere Betätigungseinrichtungen vorzusehen. Die Betätigungseinrichtung könnte beispielsweise aus einem Piezostapel oder einem Heizwiderstand bestehen, der sich bei einer Temperaturerhöhung ausdehnt. In diesem Fall würde der der Ventilklappe gegenüberliegenden Hauptseite der Aktormembran eine Stützstruktur gegenüberliegen, zwischen der der Heizwiderstand angeordnet ist. Eine weitere Möglichkeit bestünde darin, einen Druck an die der Ventilklappe abgewandten Hauptseite der Aktormembran anzulegen, falls das Mikroventil geöffnet werden soll. In diesem Fall bestünde die Betätigungseinrichtung aus einem einen Überdruck erzeugenden Element.

Bezüglich des im vorhergehenden beschriebenen Stößels wird darauf hingewiesen, daß derselbe für die Funktionsweise der vorliegenden Erfindung nicht unbedingt erforderlich ist. Das Vorhandensein des Stößels ist jedoch vorteilhaft, um den Hub der Aktormembran, der notwendig ist, um die Ventilklappe zu öffnen, zu verringern. Falls ein Stößel verwendet wird, kann derselbe jegliche laterale Form aufweisen, obwohl er vorteilhafterweise lateral auf einen Bereich in der Mitte der Aktormembran begrenzt ist, um die Biegeeigenschaften der Aktormembran nicht zu verschlechtern, und um sich in dem Bereich der Aktormembran mit dem maximalen Hub zu befinden. Es ist ferner nicht wesentlich, ob der Stößel die Ventilklappe in dem normalerweise geschlossenen Zustand berührt oder nicht berührt. Darüber hinaus ist es möglich, daß der Stößel die Ventilklappe entweder nur berührt oder mit derselben verbunden ist. Es ist ferner möglich, den Stößel an der Ventilklappe vorzusehen, so daß sich derselbe von der Oberfläche der Ventilklappe aus in Richtung der Aktormembran erstreckt.

Bezüglich der Dichtlippe wird auf folgendes hingewiesen. Obwohl die Dichtlippe im vorhergehenden einen im wesentlichen dreieckigen Querschnitt aufwies, ist es ferner möglich, daß dieselbe andere Querschnitte ausweist. Obwohl außerdem im vorhergehenden beschrieben wurde, daß die Dichtlippe die Aktormembran umläuft, ist es ferner möglich, daß dieselbe auf der Aktormembran vorgesehen ist, wobei darauf geachtet werden müßte, daß eine solche Anordnung die Biegeeigenschaften der Aktormembran nicht zu sehr verschlechtert. Für die Dichtlippe ist es lediglich wesentlich, daß dieselbe jeglichen Durchgang von dem Eingangskanalbereich zu dem Auslaßbereich in dem normalerweise geschlossenen Zustand des Mikroventils abdichtet. Die Dichtlippe könnte deshalb ferner derart angeordnet sein, daß dieselbe den Stößel nicht umgibt. In diesem Fall würde die Ventilklappe derart vorgesehen sein, daß dieselbe einen Bereich, der sich lateral über die Ausdehnung der Dichtlippe hinaus erstreckt, um in dem normalerweise geschlossenen Zustand den Einlaßkanalbereich gegen den Auslaßbereich abzudichten, und einen Bereich aufweist, auf den die Membran bzw. der Stößel wirken kann, um die Ventilklappe zu öffnen. Es wird ferner darauf hingewiesen, daß die Dichtlippe ferner an der Ventilklappe angebracht sein könnte, obwohl das Vorsehen der Ventilklappe an dem Aktorchip bevorzugt wird, um eine zu große Versteifung der Ventilklappe zu verhindern.

Gemäß einem weiteren Ausführungsbeispiel ist die Dichtlippe nicht geradlinig wie in Fig. 2a und 2b geführt, sondern ist auf andere Weise, wie z.B. meanderförmig oder wellenförmig geführt, um die Länge der Dichtlippe zu erhöhen, an der sich der Spalt zwischen der Aktormembran und der Ventilklappe bildet. Auf diese Weise kann durch eine geringfügige Vergrößerung der Ventilklappe eine erhebliche Erhöhung der Durchflußrate erzielt werden, was insbesondere bei der Pneumatik Vorteile liefert.

Obwohl im vorhergehenden Ausführungsbeispiele beschrieben wurden, bei denen eine Ventilklappe als Ventilverschluß verwendet wurde, können ferner andere Ventilverschlüsse verwendet werden, die durch die steuerbare Deformation der Aktormembran verformt werden können. Anstatt einer Ventilklappe, die einseitig eingespannt ist, kann beispielsweise eine an zwei Seiten eingespannte Membran verwendet werden. In diesem Fall wird der Eingangskanalbereich mit dem Auslaßbereich in dem geöffneten Zustand des Ventils lediglich über zwei sich gegenüberliegende Spalte zwischen zwei Dichtlippen und der als Ventilverschluß wirkenden Membran verbunden sein. In Fig. 1a und 1b würde in diesem Fall die Dichtlippe in diesen Figuren nicht zu sehen sein, sondern stattdessen würde die Verschlußklappe entlang dieser Kante ebenfalls an dem Klappenchip befestigt sein. In dem geöffneten Zustand würde sich die Ventilverschlußmembran in der Form eines Zylindersegments mit einer Krümmung entlang der Richtung zwischen den zwei eingespannten Kanten durchbiegen, so daß an den zwei sich gegenüberliegenden anderen Kanten der Ventilverschlußmembran, d.h. vor und hinter der Zeichenebene von Fig. 1a und 1b, ein Spalt zwischen der Dichtlippe und der Ventilverschlußmembran gebildet wird, um einen Durchlaß zu bilden. Auf ähnliche Weise könnte ein dreiseitig eingespannter Ventilverschluß vorgesehen werden, wobei jedoch die Verformbarkeit reduziert ist.

Bezugnehmend auf die Fig. 3, 4, 5a und 5b wird darauf hingewiesen, daß die in denselben gezeigten Ausführungsbeispiele lediglich spezielle Anwendungsmöglichkeiten des erfindungsgemäßen NC-Mikroventils zeigen, und daß andere Anwendungsbeispiele ebenfalls möglich sind.

## Patentansprüche

1. Mikroventil mit einem normalerweise geschlossenen Zustand, mit einer Membran (80);
einer Betätigungseinrichtung (100) zur steuerbaren Deformation der Membran (80);
einem durch die steuerbare Deformation der Membran (80) verformbaren Ventilverschluß (180), der der Membran (80) zumindest teilweise gegenüberliegt und der in einer ersten Stellung in dem normalerweise geschlossenen Zustand des Ventils entlang einer zwischen dem Ventilverschluß (180) und der Membran (80) angeordneten Dichtlippe (130) aufliegt, wobei ein Auslaß (140) des Ventils gegen einen Eingangskanal (170), der an den Ventilverschluß (180) angrenzt, fluiddicht abgeschlossen ist, und wobei der Ventilverschluß (180) in eine zweite Stellung verformbar ist, um in einem offenen Zustand des Ventils den Auslaß (140) mit dem Eingangskanal (170) fluidmäßig zu verbinden, **dadurch gekennzeichnet, dass** die Dichtlippe (130) derart angeordnet ist, daß der Auslaß (140) des Ventils, mit einem unterbrochenen Abschnitt der Dichtlippe (130) fluidmäßig verbunden ist.

2. Mikroventil gemäß Anspruch 1, bei dem auf einer dem Ventilverschluß (180) gegenüberliegenden Seite (110) der Membran (80) ein Stößel (120) zum Drücken gegen den Ventilverschluß (180), wenn die Betätigungseinrichtung (100) die Membran (80) deformiert, vorsteht.

3. Mikroventil gemäß Anspruch 1 oder 2, bei dem die Betätigungseinrichtung (100) eine Piezokeramik (100) ist, die auf einer dem Ventilverschluß (180) abgewandten Seite (90) der Membran (80) angebracht ist.

4. Mikroventil gemäß einem der Ansprüche 1 bis 3, bei dem der Ventilverschluß (180) eine Verschlußklappe (180) ist, die in der Nähe des unterbrochenen Abschnitts der Dichtlippe (130) eingespannt ist, und bei dem die Verformung des Ventilverschlusses (180) eine klappmäßige Biegung der Verschlußklappe (180) ist.

5. Mikroventil gemäß Anspruch 4, bei dem die Verschlußklappe (180) an einem oder mehreren Teilen der nicht eingespannten Stellen versteift ist.

6. Mikroventil gemäß einem der Ansprüche 1 bis 3, bei dem der Ventilverschluß eine an zwei gegenüberliegenden Randabschnitten eingespannte durchbiegbare Membran ist, wobei sich einer der Randabschnitte in der Nähe des unterbrochenen Abschnitts der Dichtlippe befindet, und bei dem die Verformung des Ventilverschlusses ein Durchbiegen der durchbiegbaren Membran ist.

7. Mikroventil gemäß einem der Ansprüche 1 bis 6, bei dem die Membran (80) und die Dichtlippe (130) in ein Substrat strukturiert sind, und bei dem durch die Verformung des Ventilverschlusses (180) ein Spalt (190) zwischen der Dichtlippe (130) und dem Ventilverschluß (180) entsteht, durch den der Auslaß (140) mit dem Eingangskanal (170) fluidmäßig verbunden ist.

8. Mikroventil gemäß einem der Ansprüche 2 bis 7, bei dem die Dichtlippe (130) den Stößel (120) bis auf den unterbrochenen Abschnitt umgibt.

9. Mikroventil gemäß einem der Ansprüche 1 bis 8, das ferner folgende Merkmale aufweist:
einen ersten Chip (20), in dem die Membran (80) gebildet ist, die von der Dichtlippe (130) bis auf einen unterbrochenen Abschnitt entlang des Rands der Membran (80) umgeben ist, und
einem zweiten Chip (30), der mit dem ersten Chip (20) gebondet ist, und in dem der Ventilverschluß (180) gebildet ist,
wobei die laterale Erstreckung des Ventilverschlusses (180) zumindest die laterale Erstreckung der Dichtlippe (130) überspannt, und wobei der Ventilverschluß (180) zumindest in der Nähe des unterbrochenen Abschnitts mit dem zweiten Chip (30) verbunden ist.

10. Mikroventil gemäß Anspruch 9, bei dem ein Stößel (120) auf der Membran (80) gebildet ist, der an den Ventilverschluß (180) gebondet ist.

11. Mikroventil gemäß einem der Ansprüche 1 bis 10, bei dem zwischen dem Ventilverschluß (180) und der Membran (80) Stützelemente gebildet sind, um in dem normalerweise geschlossenen Zustand des Ventils ein unerwünschtes teilweises Durchbiegen des Ventilverschlusses (180) zu verhindern.

12. Mikroperistaltikpumpe, die zumindest ein Mikroventil gemäß einem der Ansprüche 1 bis 11 aufweist.

13. Mikro-Drei/Zwei-Wegeventil, das zumindest ein Mikroventil gemäß einem der Ansprüche 1 bis 11 aufweist.

14. Mikrofluidsystem, das zumindest ein Mikroventil gemäß einem der Ansprüche 1 bis 11 aufweist.

## Claims

1. Microvalve with a normally closed state, comprising
a membrane (80);
an actuation means (100) for controllable deformation of the membrane (80);
a valve shutter (180) which is deformable by the controllable deformation of the membrane (80), which at least partially opposes the membrane (80), and which rests, in a first position in the normally closed state of the valve, along a sealing lip (130) arranged between the valve shutter (180) and the membrane (80), with an outlet (140) of the valve being sealed in a fluid-tight manner against an input channel (170) bordering on the valve shutter (180), and the valve shutter (180) being deformable into a second position so as to bring the outlet (140) into fluidic communication with the input channel (170) in an open state of the valve, **characterized in that** the sealing lip (130) is arranged such that the outlet (140) of the valve is in fluidic communication with an interrupted section of the sealing lip (130).

2. Microvalve as claimed in claim 1, wherein, on one side (110) of the membrane (80), which side is opposite to the valve shutter (180), a tappet (120) protrudes for pressing against the valve shutter (180), when the actuation means (100) deforms the membrane (80).

3. Microvalve as claimed in claim 1 or 2, wherein the actuation means (100) is a piezoceramic (100) arranged on a side (90) of the membrane (80) which is facing away from the valve shutter (180).

4. Microvalve as claimed in any of claims 1 to 3, wherein the valve shutter (180) is a shutter flap (180) engaged near the interrupted section of the sealing lip (130), and wherein the deformation of the valve shutter (180) is a flapping bending of the shutter flap (180).

5. Microvalve as claimed in claim 4, wherein the shutter flap (180) is stiffened at one or several parts of the non-engaged locations.

6. Microvalve as claimed in any of claims 1 to 3, wherein the valve shutter is a bendable membrane engaged at two opposing edge sections, one of the edge sections being located near the interrupted section of the sealing lip, and wherein the deformation of the valve shutter is a bending of the bendable membrane.

7. Microvalve as claimed in any of claims 1 to 6, wherein the membrane (80) and the sealing lip (130) are structured into a substrate, and wherein a gap (190) is formed between the sealing lip (130) and the valve shutter (180) due to the deformation of the valve shutter (180), by which gap (190) the outlet (140) is in fluid communication with the input channel (170).

8. Microvalve as claimed in any of claims 2 to 7, wherein the sealing lip (130) surrounds the tappet (120) except for the interrupted section.

9. Microvalve as claimed in any of claims 1 to 8, further comprising:
a first chip (20) in which the membrane (80), which is surrounded by the sealing lip (130) along the edge of the membrane (80) except for an interrupted section, is formed, and
a second chip (30) which is bonded to the first chip (20) and in which the valve shutter (180) is formed,
wherein the lateral extension of the valve shutter (180) exceeds at least the lateral extension of the sealing lip (130), and wherein the valve shutter (180) is connected to the second chip (30) at least near the interrupted section.

10. Microvalve as claimed in claim 9, wherein a tappet (120) bonded to the valve shutter (180) is formed on the membrane (80).

11. Microvalve as claimed in any of claims 1 to 10,
wherein supporting elements are formed between the valve shutter (180) and the membrane (80) so as to prevent, in the normally closed state of the valve, an undesired partial bending of the valve shutter (180).

12. Microperistaltic pump comprising at least one microvalve as claimed in any of claims 1 to 11.

13. Three/two-way microvalve comprising at least one microvalve as claimed in any of claims 1 to 11.

14. Microfluid system comprising at least one microvalve as claimed in any of claims 1 to 11.

## Revendications

1. Microsoupape se trouvant normalement à l'état fermé, avec
une membrane (80) ;
un dispositif d'actionnement (100) destiné à déformer de manière contrôlée la membrane (80) ;
un obturateur de soupape (180) pouvant être déformé par la déformation contrôlée de la membrane (80), lequel se situe au moins partiellement vis-à-vis de la membrane (80) et qui, dans une première position à l'état normalement fermé de la soupape, s'appuie le long d'une lèvre d'étanchéité (130) disposée entre l'obturateur de membrane (180) et la membrane (80), une sortie (140) de la soupape étant obturée de manière étanche aux fluides par rapport à un canal d'entrée (170) adjacent à l'obturateur de soupape (180) et l'obturateur de soupape (180) pouvant être déformé dans une seconde position, pour relier en fluide, dans un état ouvert de la soupape, la sortie (140) et le canal d'entrée (170), **caractérisée par le fait que** la lèvre d'étanchéité (130) est disposée de sorte que la sortie (140) de la soupape soit reliée en fluide à un segment interrompu de la lèvre d'étanchéité (130).

2. Microsoupape selon la revendication 1, dans laquelle s'élève sur une face (110) opposée à l'obturateur de soupape (180) un poussoir (120) destiné à pousser contre l'obturateur de soupape (180) lorsque le dispositif d'actionnement (100) déforme la membrane (80).

3. Microsoupape selon la revendication 1 ou 2, dans laquelle le dispositif d'actionnement (100) est une piézocéramique (100) qui est placée sur une face (90) de la membrane (80) opposée à l'obturateur de soupape (180).

4. Microsoupape selon l'une des revendications 1 à 3, dans laquelle l'obturateur de soupape (180) est un clapet d'obturation (180) fixé à proximité du segment interrompu de la lèvre d'étanchéité (130) et dans laquelle la déformation de l'obturateur de soupape (180) est une flexion en rabattement du clapet d'obturation (180).

5. Microsoupape selon la revendication 4, dans laquelle le clapet d'obturation (180) est renforcé à une ou plusieurs parties des endroits non fixés.

6. Microsoupape selon l'une des revendications 1 à 3, dans laquelle l'obturateur de soupape est une membrane fléchissante fixée à deux segments de bordure opposés, l'un des segments de bordure se situant à proximité de la lèvre d'étanchéité et dans laquelle la déformation de l'obturateur de soupape est un fléchissement de la membrane fléchissante.

7. Microsoupape selon l'une des revendications 1 à 6, dans laquelle la membrane (80) et la lèvre d'étanchéité (130) sont structurées dans un substrat et dans laquelle se produit, par la déformation de l'obturateur de soupape (180), un interstice (190) entre la lèvre d'étanchéité (130) et l'obturateur de soupape (180) par lequel la sortie (140) est reliée en fluide au canal d'entrée (170).

8. Microsoupape selon l'une des revendications 2 à 7, dans laquelle la lèvre d'étanchéité (130) entoure le poussoir (120), à l'exception du segment interrompu.

9. Microsoupape selon l'une des revendications 1 à 8, présentant, par ailleurs, les caractéristiques suivantes :
une première puce (20) dans laquelle est formée la membrane (80) qui est entourée par la lèvre d'étanchéité (130), à l'exception d'un segment interrompu, le long du bord de la membrane (80), et
une seconde puce (30) qui est assemblée à la première puce (20) et dans laquelle est formé l'obturateur de soupape (180),
l'extension latérale de l'obturateur de soupape (180) surplombant au moins l'extension latérale de la lèvre d'étanchéité (130) et l'obturateur de soupape (180) étant assemblé au moins à proximité du segment interrompu à la seconde puce (30).

10. Microsoupape selon la revendication 9, dans laquelle un poussoir (120) est formé sur la membrane (80), lequel est assemblé à l'obturateur de soupape (180).

11. Microsoupape selon l'une des revendications 1 à 10, dans laquelle sont formés, entre l'obturateur de soupape (180) et la membrane (80), des éléments d'appui, afin d'éviter, à l'état normalement fermé de la soupape, une flexion partielle non souhaitée de l'obturateur de soupape (180).

12. Micropompe péristaltique présentant au moins une microsoupape selon l'une des revendications 1 à 11.

13. Microsoupape à deux/trois voies présentant au moins une microsoupape selon l'une des revendications 1 à 11.

14. Microsystème à fluide présentant au moins une microsoupape selon l'une des revendications 1 à 11.
